# EUROPEAN PATENT SPECIFICATION

(11) **EP 1 560 464 B1**
(45) Date of publication and mention of the grant of the patent: **14.02.2007**
(21) Application number: 04256485.6
(22) Date of filing: 21.10.2004
(51) Int. Cl.: H05B 6/80

(54) **Wall-mounted microwave oven**
Wandmontierter Mikrowellenofen
Four à micro-ondes monté sur un mur

(30) Priority: 27.01.2004 KR 2004004940
(43) Date of publication of application: 03.08.2005
(73) Proprietor: SAMSUNG ELECTRONICS CO., LTD., Suwon-city, Gyeonggi-do (KR)
(72) Inventor: Oh, Keun Seuk, Kwonsun-Gu, Suwon-Si, Gyeonggi-do (KR); Seo, Sang-Seok, Suwon-Si, Gyeonggi-Do (KR)
(74) Representative: Robinson, Ian Michael

(56) References cited:
- EP-A- 0 358 344
- US-A- 4 794 219
- US-A- 4 908 488

## Description

The present invention relates to a wall-mounted microwave oven, and more particularly, to a wall-mounted microwave oven including an air guide to feed hot air to a cooking chamber.

Generally, a wall-mounted microwave oven is mounted over another cooking appliance such as a gas oven installed on a kitchen sink in a kitchen space. Such a wall-mounted microwave oven not only performs a cooking function using microwaves, similarly to that of general microwave ovens, but also performs a function for externally exhausting fumes, smoke or smell of food rising from another cooling appliance during a cooking operation for the food.

Similarly to general microwave ovens, a wall-mounted microwave oven includes a cooking chamber and an electric element chamber partitioned in the interior of an oven body defining the appearance of the microwave oven, to cook food in the cooking chamber. Exhaust passages are defined between facing walls of the oven body and cooking chamber and between facing walls of the oven body and electric element chamber, respectively. The microwave oven also includes an exhaust fan arranged at a rear upper portion of the oven body, and communicating with the exhaust passages. With this configuration, the microwave oven can suck fumes, smoke and food odor rising beneath the oven body through the exhaust passages in accordance with an operation of the exhaust fan, and then exhaust them to the exterior.

For such a wall-mounted microwave oven, a convection type microwave oven has been known. The present invention relates to a convection type microwave oven. As disclosed in Korean Utility Model No. 20-0327751, such a convection type microwave oven includes an electric heater for generating heat by use of electric resistance, and a convection fan, which are arranged in a rear of a cooking chamber. With this configuration, the convection type microwave oven not only has a food cooking function using microwaves, as in general microwave ovens, but also directly heats the surface of food by use of heat generated from the electric heater, thereby reducing the cooking time while efficiently achieving the cooking operation.

In such a conventional microwave oven, however, air is supplied into the cooking chamber before being sufficiently heated by the heater because the convection fan is mounted to a heater casing in a rear of the electric heater such that it is arranged just near the electric heater. For this reason, there is a problem in that the temperature of the supplied hot air is low, so that the cooking efficiency of the microwave oven is degraded.

Furthermore, the hot air is introduced, at a time, into the cooking chamber through an inlet arranged in front of the heater. For this reason, the hot air has a low flow rate, so that it circulates ineffectively in the cooking chamber. As a result, there are problems of a large loss of heat and an increased cooking time.

EP-A-0,358,344 and US-A-4,794,219 both disclose microwave ovens having electrical resistance heating means and a fan for passing air over the heating means and through into the oven cavity. EP-A-0,358,344 provides basis for the pre-characterising portion of the independent claims appended hereto.

A further prior art arrangement is disclosed in US-A-4,908,488 in which a fan is located within a heater element.

An aim of the present invention is to address the above or other problems of the prior art.

A preferred aim of the invention is to provide a wall-mounted microwave oven capable of heating hot air for a sufficient period of time, thereby increasing the temperature of the hot air, while discharging the hot air into a cooking chamber in a concentrated fashion, thereby achieving a reduction in heat loss, a reduction in cooking time, and an enhancement in cooking efficiency.

Additional aims and/or advantages of the invention will be set forth in part in the description which follows and, in part, will be obvious from the description, or may be learned by practice of the invention.

According to the present invention there is provided an apparatus and method as set forth in the appended claims. Preferred features of the invention will be apparent from the dependent claims, and the description which follows.

In one aspect of the present invention there is provided a wall-mountable microwave oven comprising: a cooking chamber; a heater casing having a heater installed therein to generate hot air; and a blowing fan to supply the hot air generated by the heater to the cooking chamber; characterised by: the blowing fan being arranged inside the heater; and at least one guide member being mounted on the inner peripheral surface of the heater casing, each guide member comprising a first guide member and a second guide member; wherein the first guide member guides a first part of the hot air, supplied by the blowing fan, to be introduced into the cooking chamber; and the second guide member guides and circulates the remaining part of the hot air along the heater.

The first guide member may be connected with the second guide member.

The heater casing further comprises a plurality of through holes to communicate with the cooking chamber, wherein first guide member is arranged to extend in parallel to a direction of the first part of hot air flowing toward a hot air inlet provided at the heater casing to communicate with the cooking chamber so that it guides the first part of hot air toward the hot air inlet, and the second guide member is arranged to extend inclinedly at a predetermined angle so that it guides the remaining part of the hot air to circulate along the heater.

The wall-mounted microwave oven, wherein the at least one guide member is arranged between the heater casing and the heater while being uniformly spaced apart from each other around the heater.

The heater casing may be arranged at one side wall of an oven body.

The wall-mounted microwave oven may further comprise a motor arranged at a top wall of an oven body, and connected with the blowing fan via pulleys and a belt to transmit a drive force therefrom to the blowing fan.

These and/or other aspects and advantages of the invention will become apparent and more readily appreciated from the following description of the embodiments, taken in conjunction with the drawings in which:
Figure 1 is a perspective view illustrating a wall-mounted microwave oven according to an embodiment of the present invention; and
Figure 2 is a sectional view illustrating the heater casing, to which the heater, blowing fan, and air guide members are attached, in the wall-mounted microwave oven shown in Figure 1.

Reference will now be made in detail to the embodiments of the present invention, examples of which are illustrated in the accompanying drawings, wherein like reference numerals refer to the like elements throughout. The embodiments are described below to explain the present invention by referring to the figures.

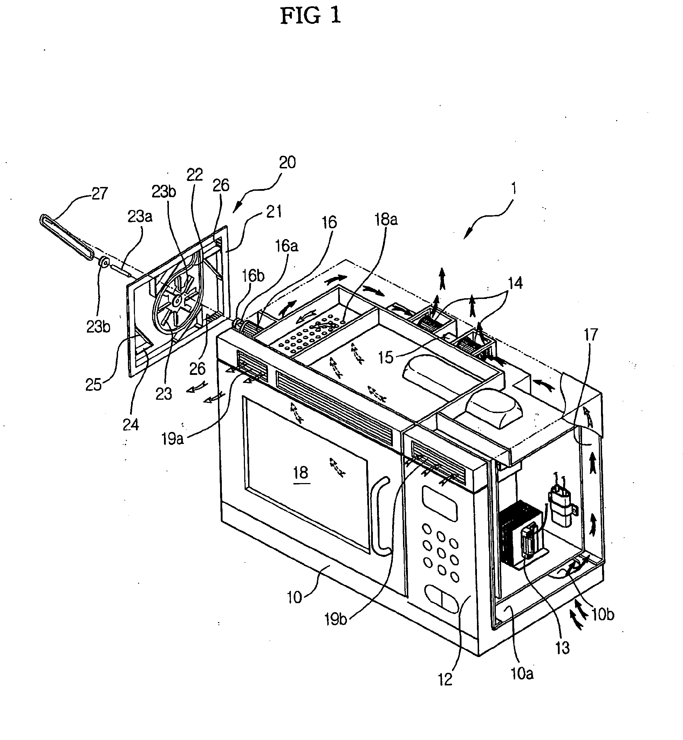

Figure 1 is a perspective view illustrating a wall-mounted microwave oven according to an embodiment of the present invention. In Figure 1, the wall-mounted microwave oven 1 according to the illustrated embodiment of the present invention, is typically mounted to a wall in a kitchen space. Also, a complex cooking appliance, which is provided with a plurality of gas oven ranges at the top thereof, is typically arranged beneath the microwave oven 1. Around the microwave oven 1, a plurality of sideboards may be arranged to store diverse dishes and kitchen utensils.

The microwave oven 1 cooks food using microwaves, while sucking fumes, smoke and food odor rising from the complex cooking appliance during a cooking operation thereof, and exhausting them to an exterior.

The microwave oven 1 includes an oven body 10 having a box shape to define the appearance of the microwave oven 1, a cooking chamber 18 and an electric element chamber 12, which are defined in the interior of the oven body 10 and partitioned from each other.

An exhaust passage 17 is defined in the oven body 10 along the bottoms, opposite sides and tops of the cooking chamber 18 and electric element chamber 12, in order to exhaust, to the exterior, fumes and smoke rising from the complex cooking appliance arranged beneath the oven body 10. A pair of exhaust fans 14 are installed at a rear upper portion of the oven body 10 to externally discharge exhaust gas, fumes, etc. flowing through the exhaust passage 17. A fan motor 15 is also installed at the rear upper portion of the oven body 10 to rotate the exhaust fans 14. The exhaust passage 17 is partitioned from the cooking chamber 11 and electric element chamber 12.

In the electric element chamber 12, electric elements such as a high-voltage transformer 13 are arranged. A front air inlet 19b is provided in a front side of the oven body 10 above the electric element 12. A front air outlet 19a is also provided at the oven body 10 in a front side of the oven body 10 above the cooking chamber 18. The front air inlet 19b and front air outlet 19a allow air to circulate through the electric element chamber 12 and cooking chamber 18, to cool the electric elements received in the electric element chamber 12 and to exhaust moisture and food odor existing in the cooking chamber 18. With the above described configuration, microwaves are irradiated to food placed in the cooking chamber 18, so that the food can be cooked by heat caused by the microwaves irradiated thereto.

A bottom plate 10a is mounted to the bottom of the oven body 10. The bottom plate 10a is provided with an exhaust inlet 10b. When the fan motor 15 operates to rotate the exhaust fans 14, exhaust gas and food odor rising beneath the oven body 10 are sucked into the exhaust passage 17 through the exhaust inlet 10b. After flowing through the exhaust passage 17, the sucked fumes may be exhausted to the exterior via a duct (not shown) communicating with the exterior. The fumes passing through the exhaust passage 17 may be again discharged into the kitchen space after being filtered while passing through a discharge grill 18a provided at the oven body 10 in a front side of the oven body 10 over the cooking chamber 18.

A convection heater unit 20 is installed at a side wall of the oven body 10 opposite to the electric element chamber 12(i.e., a left side wall of the oven body 10) in Figure 1. The convection heater unit 20 comprises a heater 22, a blowing fan 23, and a heater casing 21. The heater casing 21 comprises a rectangular box-shaped structure having a size equal to the corresponding side wall of the oven body 10. In the heater casing 21, the heater 22 and blowing fan 23 are installed such that the heater 22 is arranged around the blowing fan 23. The heater casing 21 is also provided with first and second guide members 24 and 25 to guide hot air discharged from the periphery of the heater 22 by the blowing fan 23.

A fan shaft 23a extends horizontally through the heater casing 21 and rotatably supported by the heater casing 21. The fan shaft 23a is coupled with the blowing fan 23 at an inner end thereof arranged inside the heater casing 21, and coupled with a pulley 23b at an outer end thereof arranged outside the heater casing 21. A belt 27 connected to a motor 16 is connected to the pulley 23b, to transmit a drive force from the motor 16 to the blowing fan 23. The motor 16 is mounted to the oven body 10 over the cooking chamber 18.

The motor 16 comprises a motor shaft 16a to output a rotating force from the motor 16, and a pulley 16b coupled to the motor shaft 16a and connected with the pulley 23b coupled to the fan shaft 23a via the belt 27. Accordingly, the rotating force from the motor 16 can be transmitted to the blowing fan 23 via the belt 27 connected between the pulleys 16b and 23b.

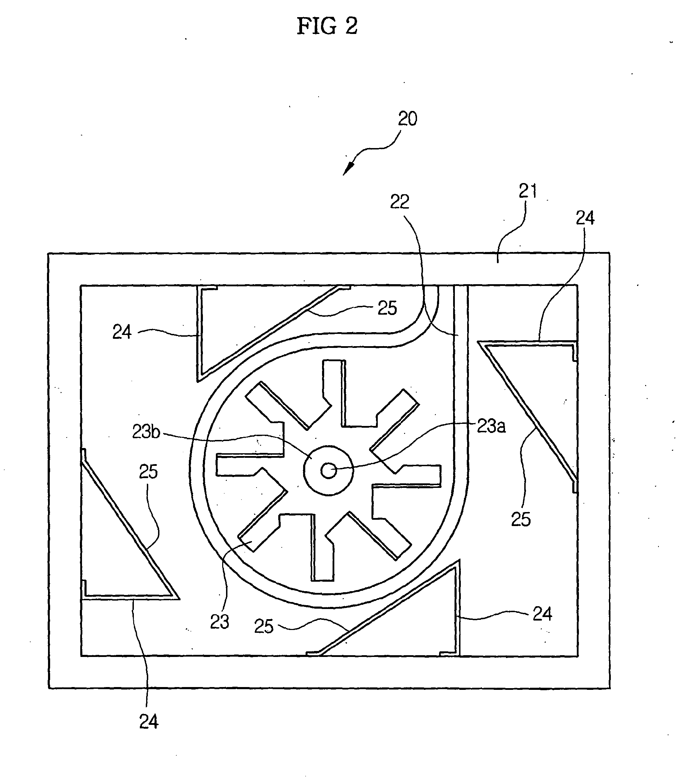

Figure 2 is a sectional view illustrating the heater casing, to which the heater, blowing fan, and air guide members are attached, in the wall-mounted microwave oven shown in Figure 1.

The heater casing 21 has a centrally-recessed rectangular box-shaped structure. As described above, the heater 22 is arranged inside the heater casing 2. In the illustrated embodiment of the present invention, the heater 22 has an annular structure, except for a power connection portion thereof. Of course, the heater 22 may have a structure other than the annular structure.

The blowing fan 23 is arranged inside the heater 22. The blowing fan 23 may be an axial-flow fan. The blowing fan 23 is coupled, at a central portion thereof, to the fan shaft 23a inside the heater casing 21, so that it is coupled with the pulley 23b via the fan shaft 23a outside the heater casing 21.

The first and second guide members 24 and 25 are mounted in multiples to the inner peripheral surface of the heater casing 21 such that they are arranged around the heater 22 while being uniformly spaced apart from each other. A plurality of through holes 26 are provided at a peripheral portion of the heater casing 21 such that they communicate with the cooking chamber 18. The through holes 26 are arranged such that they receive hot air respectively guided by the first and second air guide members 24 and 25 to supply the hot air into the cooking chamber 18. In this aspect of the present invention, each first guide member 24 is mounted, at one end thereof, to an inner peripheral surface portion of the heater casing 21 near a corresponding one of the through holes 26 while extending in parallel to a flow direction of a hot air flow directed to the corresponding through hole 26. Accordingly, each first guide member 24 guides hot air discharged at the periphery of the heater 22 toward the corresponding through hole 26. Each second guide member 25 is mounted, at one end thereof, to the inner peripheral surface portion of the heater case 21 where a corresponding one of the first guide members 24 is mounted and connected, at another end thereof, with the other end of the corresponding first guide member 24 such that the second guide member 25 extends inclinedly at a predetermined angle with respect to the inner peripheral surface portion of the heater casing 21 to face the heater 22. Each second guide member 25 serves to guide hot air, discharged from the periphery of the heater 22, to flow around the heater 22. The corresponding first and second guide members 24 and 25 form a triangular structure, along with the inner peripheral surface portion of the heater casing 21, to which they are mounted.

The first and second guide members 24 and 25 each comprises a predetermined width sufficient to allow hot air to flow along them. In accordance with guiding functions of the first and second guide members 24 and 25, hot air is introduced into the cooking chamber 18 of the oven body 10 through the through holes 26.

Now, the operation, function and effect of the wall-mounted microwave oven according to the illustrated embodiment of the present invention will be described.

As described above, the wall-mounted microwave oven comprises a structure for exhausting, to the exterior, vapor and food odor rising from the cooking appliance arranged beneath the microwave oven. This wall-mounted microwave oven not only serves as a general microwave oven having a cooking function using microwaves generated from the magnetron, but also serves as a convection type oven which receives heat from the heater to rapidly heat the surface of food, thereby rapidly cooking the food.

When electric power is supplied to the microwave oven, and a convection course is selected, the heater 22 begins to generate heat, and the blowing fan 23 begins to rotate. In accordance with the rotation of the blowing fan 23, air heated by the heater 22 is supplied into the cooking chamber 18.

The hot air discharged at the periphery of the heater 22 is partially guided by the first guide members 24 arranged along the rotating direction of the blowing fan 23 and introduced into the cooking chamber 18 through the through holes 26. A remaining part of the hot air is guided by the second guide members 25 inclined at a predetermined angle so that the hot air flows around the heater 22. The hot air flowing around the heater 22 in accordance with each second guide member 25 is then partially guided by the first guide member 24 arranged just downstream from the second guide member 25, so that it is supplied into the cooking chamber 18. A remaining part of the hot air is then guided by the downstream-side second guide member 25, so that it flows around the heater 22. Thus, the hot air discharged at the periphery of the heater 22 is partially supplied into the cooking chamber 18 while partially circulating around the heater 22.

In accordance with such a guiding function, the hot air is heated for an extended period of time, so that the temperature thereof is increased. Since the hot air is partially and sequentially supplied into the cooking chamber 18 through the through holes 26 provided at the heater casing 21 in accordance with the guiding function of the first guide members 24, the flow rate thereof is relatively high. Accordingly, the hot air can effectively circulate in the cooking chamber 18, so that there are effects of an enhancement in cooking efficiency and a reduction in cooking time.

Vapor and food odor caused by the cooking operation are externally exhausted through the front air outlet 19a communicating with the cooking chamber 18.

As is apparent from the above description, the wall-mounted microwave oven of the present invention comprises the first and second guide members defining a flow path around the heater. The first and second guide members, allow hot air to flow rapidly, introduced into the cooking chamber while being rapidly heated to a desired high temperature. Also, the hot air can effectively circulate in the cooking chamber. Accordingly, it is possible to achieve a reduction in cooking time and an enhancement in cooking efficiency.

Although a few preferred embodiments have been shown and described, it will be appreciated by those skilled in the art that various changes and modifications might be made without departing from the scope of the invention, as defined in the appended claims.

## Claims

1. A wall-mountable microwave oven comprising:
a cooking chamber (18);
a heater casing (21) having a heater (22) installed therein to generate hot air; and
a blowing fan (23) to supply the hot air generated by the heater (22) to the cooking chamber (18);
**characterised by**:
the blowing fan (23) being arranged inside the heater (22); and
at least one guide member being mounted on the inner peripheral surface of the heater casing, each guide member comprising a first guide member (24) and a second guide member (25);
wherein the first guide member (24) guides a first part of the hot air, supplied by the blowing fan (23), to be introduced into the cooking chamber (18); and
the second guide member (25) guides and circulates the remaining part of the hot air along the heater (22).

2. The wall-mounted microwave oven of claim 1, wherein the first guide member (24) is connected with the second guide member (25).

3. The wall-mounted microwave oven of claim 1 or 2, wherein the first guide member (24) is arranged to extend in parallel to a direction of the first part of hot air flowing toward a hot air inlet (26) provided at the heater casing (21) to communicate with the cooking chamber (18) so that it guides the first part of hot air toward the hot air inlet (26), and the second guide member (25) is arranged to extend inclinedly at a predetermined angle so that it guides the remaining part of the hot air to circulate along the heater (22).

4. The wall-mounted microwave oven of any preceding claim, wherein the at least one guide member is arranged between the heater casing (21) and the heater (22) while being uniformly spaced apart from each other around the heater (22).

5. The wall-mounted microwave oven of any preceding claim, wherein the heater casing (21) is arranged at one side wall of an oven body (10).

6. The wall-mounted microwave oven of any preceding claim, further comprising:
a motor (16) arranged at a top wall of an oven body (10), and connected with the blowing fan (23) via pulleys (16b,23b) and a belt (27) to transmit a drive force therefrom to the blowing fan (23).

7. The wall-mounted microwave oven of claim 6, further comprising:
a fan shaft (23a) which extends horizontally through the heater casing (21) and coupled with the blowing fan (23) at an inner end thereof; and
a pulley (23b) arranged outside of the heater casing (21) and coupled with the fan shaft (23a);
wherein the rotating force from the motor (16) is transmitted to the blowing fan (23) via the belt (27) connected between the pulley (23b) coupled to the motor shaft and the pulley (23b) arranged outside of the heater casing (21).

8. The wall-mounted microwave oven of any preceding claim, wherein the heater casing (21) comprises a rectangular box-shaped structure.

9. The wall-mounted microwave oven of any preceding claim, wherein the heater (22) is of an annular shape.

10. The wall-mounted microwave oven of any preceding claim, wherein the blowing fan (23) is an axial-flow fan.

11. The wall-mounted microwave oven of claim 3, wherein each first guide member (24) is mounted, at one end thereof, to an inner peripheral surface portion of the heater casing (21) near a corresponding through hole and to guide the first part of the hot air discharged from a periphery of the heater (22) to the cooking chamber (18) through the corresponding through hole.

12. The wall-mounted microwave oven of claim 3, wherein each second guide member (25) is mounted, at one end thereof, to the inner peripheral surface portion of the heater casing (21) at a position relative to a corresponding first guide member (24) and connected to an end thereof, to guide the remaining part of hot air discharged from a periphery of the heater (22) to flow around the heater (22).

13. The wall-mounted microwave oven of any preceding claim, wherein corresponding first and second guide members form a triangular shape, along with an inner peripheral surface portion of the heater casing (21).

14. The wall-mounted microwave oven of any preceding claim, wherein the first and second guide members each comprises a predetermined width, to allow the first part of the hot air to flow and the remaining part of the hot air along a respective surface thereof.

15. A wall-mounted microwave oven of any preceding claim, wherein the heater (22) heats the hot air to a predetermined temperature and the first guide member (24) discharges the first part of the hot air into the cooking chamber (18) in a concentrated manner to prevent heat loss.

16. A heating unit for a microwave oven, comprising:
a heater casing (21);
a heater (22) provided inside of the heater casing (21), to generate hot air;
a blowing fan (23) to supply hot air generated by the heater (22); and
**characterised by**:
the blowing fan (23) being arranged inside the heater (22); and
a plurality of guide members each having a first side portion (25) which guides the hot air supplied by the blowing fan (23) into a cooking chamber (18) of the microwave, and a second side portion (24) which circulates the hot air along the heater (22), wherein the first side portion, the second side portion and the heater casing (21) are connected with one another, to form a triangular shape along borders of the heater casing (21).

17. The heating unit of claim 16, wherein the heater casing (21) is positioned at a side wall of the microwave oven.

## Patentansprüche

1. Mikrowellenofen zur Wandmontage mit:
einer Garkammer (18);
einem Heizungsgehäuse (21) mit einer darin eingebauten Heizung (22), um heiße Luft zu erzeugen; und
einem Gebläse (23), um die heiße Luft, die durch die Heizung (22) erzeugt wurde, der Garkammer (18) zuzuführen;
**dadurch gekennzeichnet dass**:
das Gebläse (23) innerhalb der Heizung (22) angeordnet ist; und
zumindest eine Führungseinrichtung auf der inneren umgebenden Oberfläche des Heizungsgehäuses angebracht ist, wobei jede Führungseinrichtung ein erstes Führungsglied (24) und ein zweites Führungsglied (25) aufweist;
wobei das erste Führungsglied (24) einen ersten Teil der heißen Luft, die von dem Gebläse (23) geliefert wird, in die Garkammer (18) einleitet; und
das zweite Führungsglied (25) den verbleibenden Teil der heißen Luft entlang der Heizung (22) leitet und umwälzt.

2. Wandmontierter Mikrowellenofen nach Anspruch 1,
wobei das erste Führungsglied (24) mit dem zweiten Führungsglied (25) verbunden ist.

3. Wandmontierter Mikrowellenofen nach Anspruch 1 oder 2,
wobei das erste Führungsglied (24) angeordnet ist, um sich parallel zu einer Richtung des ersten Teils der heißen Luft zu erstrecken, die auf einen Heißlufteinlass (26) zuströmt, der an dem Heizungsgehäuse (21) vorgesehen ist, um mit der Garkammer (18) in Verbindung zu stehen, so dass es den ersten Teil der heißen Luft auf den Heißlufteinlass (26) zuleitet, und das zweite Führungsglied (25) angeordnet ist, um sich in einem vorbestimmten Winkel geneigt zu erstrecken, so dass es den verbleibenden Teil der heißen Luft leitet, um sie entlang der Heizung (22) umzuwälzen.

4. Wandmontierter Mikrowellenofen nach einem vorhergehenden Anspruch, wobei die zumindest eine Führungseinrichtung zwischen dem Heizungsgehäuse (21) und der Heizung (22) angeordnet ist, während sie um die Heizung (22) herum gleichmäßig voneinander beabstandet ist.

5. Wandmontierter Mikrowellenofen nach einem vorhergehenden Anspruch, wobei das Heizungsgehäuse (21) an einer seitlichen Wandung eines Ofenkörpers (10) angeordnet ist.

6. Wandmontierter Mikrowellenofen nach einem vorhergehenden Anspruch, ferner mit:
einem Motor (16), der an einer oberen Wandung eines Ofenkörpers (10) angeordnet ist, und mit dem Gebläse (23) über Riemenscheiben (16b, 23b) und einen Riemen (27) verbunden ist, um eine Antriebskraft davon zu dem Gebläse (23) zu übertragen.

7. Wandmontierter Mikrowellenofen nach Anspruch 6, ferner mit:
einer Gebläsewelle (23a), die sich horizontal durch das Heizungsgehäuse (21) erstreckt, und mit dem Gebläse (23) an einem inneren Ende davon gekoppelt ist; und
einer Riemenscheibe (23b), die außerhalb des Heizungsgehäuses (21) angeordnet ist, und mit der Gebläsewelle (23a) gekoppelt ist;
wobei die Rotationskraft von dem Motor (16) zu dem Gebläse (23) über den Riemen (27) übertragen wird, der zwischen der Riemenscheibe (23b), die an die Motorwelle gekoppelt ist, und der Riemenscheibe (23b), die außerhalb des Heizungsgehäuses (21) angeordnet ist, angebunden ist.

8. Wandmontierter Mikrowellenofen nach einem vorhergehenden Anspruch, wobei das Heizungsgehäuse (21) eine rechteckige kastenförmigen Struktur aufweist.

9. Wandmontierter Mikrowellenofen nach einem vorhergehenden Anspruch, wobei die Heizung (22) eine Ringform aufweist.

10. Wandmontierter Mikrowellenofen nach einem vorhergehenden Anspruch, wobei das Gebläse (23) ein Axialströmungsgebläse ist.

11. Wandmontierter Mikrowellenofen nach Anspruch 3, wobei jedes der ersten Führungsglieder (24) an einem Ende davon an einem inneren umgebenden Oberflächenbereich des Heizungsgehäuses (21) nahe eines entsprechenden Durchgangsloches montiert ist, um den ersten Teil der heißen Luft, die von einer Umgebung der Heizung (22) ausgetragen wird, durch das entsprechende Durchgangsloch zu der Garkammer (18) zu leiten.

12. Wandmontierter Mikrowellenofen nach Anspruch 3, wobei jedes zweite Führungsglied (25) an einem Ende davon an dem inneren umgebenden Oberflächenbereich des Heizungsgehäuses (21) an einer Position relativ zu einem entsprechenden ersten Führungsglied (24) montiert ist, und mit einen Ende davon verbunden ist, um den verbleibenden Teil der heißen Luft, die von einer Umgebung der Heizung (22) ausgetragen wird, zu leiten, um die Heizung (23) zu umströmen.

13. Wandmontierter Mikrowellenofen nach einem vorhergehenden Anspruch, wobei entsprechende erste und zweite Führungsglieder zusammen mit einem inneren umgebenden Oberflächenbereich des Heizungsgehäuses (21) eine dreieckige Form bilden.

14. Wandmontierter Mikrowellenofen nach einen vorhergehenden Anspruch, wobei die ersten und zweiten Führungsglieder jeweils eine vorbestimmte Breite aufweisen, um es dem ersten Teil der heißen Luft und dem verbleibenden Teil der heißen Luft zu erlauben, entlang einer betreffenden Oberfläche davon zu strömen.

15. Wandmontierter Mikrowellenofen nach einem vorhergehenden Anspruch, wobei die Heizung (22) die heiße Luft auf eine vorbestimmte Temperatur erhitzt, und das erste Führungsglied (24) den ersten Teil der heißen Luft in die Garkammer (18) auf eine konzentrierte Art und Weise austrägt, um einen Wärmeverlust zu verhindern.

16. Heizeinheit für einen Mikrowellenofen mit:
einem Heizungsgehäuse (21);
einer Heizung (22), die innerhalb des Heizungsgehäuses (21) vorgesehen ist, um heiße Luft zu erzeugen;
einem Gebläse (23) um von der Heizung (22) erzeugte heiße Luft zu liefern; und **gekennzeichnet ist durch**:
das innerhalb der Heizung (22) angeordnete Gebläse (23); und
eine Mehrzahl an Führungseinrichtungen, die jeweils einen ersten seitlichen Bereich (25), der die von dem Gebläse (23) gelieferte heiße Luft in eine Garkammer (18) der Mikrowelle leitet, und einen zweiten seitlichen Bereich (24) aufweisen, der die heiße Luft entlang der Heizung (22) umwälzt, wobei der erste seitliche Bereich, der zweite seitliche Bereich und das Heizungsgehäuse (21) miteinander verbunden sind, um entlang der Ränder des Heizungsgehäuses (21) eine dreieckige Form zu bilden.

17. Heizungseinheit nach Anspruch 16,
wobei das Heizungsgehäuse (21) an einer seitlichen Wandung des Mikrowellenofens angeordnet ist.

## Revendications

1. Un four à micro-ondes, apte à être monté sur un mur ou une paroi, comprenant:
- une chambre de cuisson (18);
- un boîtier (21) d'élément chauffant, comprenant un élément chauffant (22) installé en son sein pour générer de l'air chaud; et
- un ventilateur de soufflage (23), pour fournir l'air chaud généré par l'élément chauffant (22), à la chambre de cuisson (18);
**caractérisé par le fait que**:
- le ventilateur de soufflage (23) est agencé à l'intérieur de l'élément chauffant (22); et
- au moins un organe de guidage est monté sur la surface périphérique intérieure du boîtier d'élément chauffant, chaque organe de guidage comprenant au moins un premier organe de guidage (24) et un deuxième organe de guidage (25);
dans lequel
- le premier organe de guidage (24) guide une première partie de l'air chaud, fournie par le ventilateur de soufflage (23), pour être introduite dans la chambre de cuisson (18); et
- le deuxième organe de guidage (25) guide et fait circuler la partie restante de l'air chaud le long de l'élément chauffant (22).

2. Le four à micro-ondes apte à être monté sur un mur ou une paroi selon la revendication 1, dans lequel le premier organe de guidage (24) est relié au deuxième organe de guidage (25).

3. Le four à micro-ondes apte à être monté sur un mur ou une paroi selon la revendication 1 ou 2, dans lequel le premier organe de guidage (24) est agencé pour s'étendre en parallèle à une direction de la première partie de l'air chaud s'écoulant vers une entrée d'air chaud (26) prévue sur le boîtier d'élément chauffant (21), afin de communiquer avec la chambre de cuisson (18), de manière qu'elle guide la première partie de l'air chaud vers l'entrée d'air chaud (26), et le deuxième organe de guidage (25) est agencé pour s'étendre de façon inclinée sous un angle prédéterminé, de sorte qu'elle guide la partie restante de l'air chaud afin qu'elle circule le long de l'élément chauffant (22).

4. Le four à micro-ondes apte à être monté sur un mur ou une paroi selon l'une quelconque des revendications précédentes, dans lequel le au moins un organe de guidage est agencé entre le boîtier d'élément chauffant (21) et l'élément chauffant (22), tout en étant uniformément espacé l'un de l'autre autour de l'élément chauffant (22).

5. Le four à micro-ondes apte à être monté sur un mur ou une paroi selon l'une quelconque des revendications précédentes, dans lequel le boîtier d'élément chauffant (21) est agencé sur une paroi latérale d'un corps de four (10).

6. Le four à micro-ondes apte à être monté sur un mur ou une paroi selon l'une quelconque des revendications précédentes, comprenant en outre:
- un moteur (16), agencé sur une paroi supérieure d'un corps de four (10) et connecté au ventilateur de soufflage (23) via des poulies (16b, 23b) et une courroie (27), afin de transmettre, à partir de celui-ci, une force d'entraînement au ventilateur de soufflage (23).

7. Le four à micro-ondes apte à être monté sur un mur ou une paroi selon la revendication 6, comprenant en outre:
- un arbre de ventilateur (23a), s'étendant horizontalement à travers le boîtier d'élément chauffant (21) et couplé au ventilateur de soufflage (23) à une extrémité intérieure de celui-ci; et
- une poulie (23b), agencée à l'extérieur du boîtier d'élément chauffant (21) et couplée à l'arbre de ventilateur (23a);
dans lequel la force de rotation venant du moteur (16) est transmise au ventilateur de soufflage (23) via la courroie (27) connectée entre la poulie (23b) couplée à l'arbre de moteur et la poulie (23b) agencée à l'extérieur du boîtier d'élément chauffant (21).

8. Le four à micro-ondes apte à être monté sur un mur ou une paroi selon l'une quelconque des revendications précédentes, dans lequel le boîtier d'élément chauffant (21) présente une structure en forme de boîte rectangulaire.

9. Le four à micro-ondes apte à être monté sur un mur ou une paroi selon l'une quelconque des revendications précédentes, dans lequel l'élément chauffant (22) est de forme annulaire.

10. Le four à micro-ondes apte à être monté sur un mur ou une paroi selon l'une quelconque des revendications précédentes, dans lequel le ventilateur de soufflage (23) est un ventilateur à écoulement axial.

11. Le four à micro-ondes apte à être monté sur un mur ou une paroi selon la revendication 3, dans lequel chaque premier organe de guidage (24) est monté, à une extrémité de celui-ci, sur une partie de surface périphérique intérieure du boîtier d'élément chauffant (21), proche d'un trou traversant correspondant et pour guider la première partie de l'air chaud déchargé d'une périphérie de l'élément chauffant (22) vers la chambre de cuisson (18), à travers le trou traversant correspondant.

12. Le four à micro-ondes apte à être monté sur un mur ou une paroi selon la revendication 3, dans lequel chaque deuxième organe de guidage (25) est monté, à une extrémité de celui-ci, sur la partie de surface périphérique intérieure du boîtier d'élément chauffant (21), en une position relative par rapport à un premier organe de guidage (24) correspondant et connecté à une extrémité de celui-ci pour guider la partie restante de l'air chaud déchargée d'une périphérie d'élément chauffant (22) pour s'écouler autour de l'élément chauffant (22).

13. Le four à micro-ondes apte à être monté sur un mur ou une paroi selon l'une quelconque des revendications précédentes, dans lequel des premier et deuxième organes de guidage correspondants sont réalisés en forme triangulaire, le long d'une partie de surface périphérique intérieure du boîtier d'élément chauffant (21).

14. Le four à micro-ondes apte à être monté sur un mur ou une paroi selon l'une quelconque des revendications précédentes, dans lequel les premier et deuxième organes de guidage présentent chacun une largeur prédéterminée, pour permettre à la première partie de l'air chaud de s'écouler, et à la partie restante de l'air chaud de passer sur une surface respective de ceux-ci.

15. Le four à micro-ondes apte à être monté sur un mur ou une paroi selon l'une quelconque des revendications précédentes, dans lequel l'élément chauffant (22) chauffe l'air chaud à une température prédéterminée, et le premier organe de guidage (24) décharge la première partie de l'air chaud dans la chambre de cuisson (18) de manière concentrée, afin d'empêcher une perte thermique.

16. Une unité de chauffage pour un four à micro-ondes, comprenant:
- un boîtier (21) d'élément chauffant;
- un élément chauffant (22) prévu à l'intérieur du boîtier d'élément chauffant (21), pour générer de l'air chaud;
- un ventilateur de soufflage (23) pour fournir de l'air chaud généré par l'élément chauffant (22); et
**caractérisée par:**
- **le fait que** le ventilateur de soufflage (23) est agencé à l'intérieur de l'élément chauffant (22); et
- une pluralité d'organes de guidage ayant chacun une première partie latérale (25), guidant l'air chaud fourni par le ventilateur de soufflage (23) dans une chambre de cuisson (18) du four à micro-ondes, et une deuxième partie latérale (24), qui fait circuler l'air chaud le long de l'élément chauffant (22), dans lequel la première partie latérale, la deuxième partie latérale et le boîtier d'élément chauffant (21) sont connectés les uns aux autres, pour présenter une forme triangulaire, le long des bordures du boîtier d'élément chauffant (21).

17. L'unité de chauffage selon la revendication 16, dans laquelle le boîtier d'élément chauffant (21) est positionné sur une paroi latérale du four à micro-ondes.
